(19) Europäisches Patentamt
European Patent Office
Office européen des brevets

(11) EP 3 366 719 B1

(12) **EUROPEAN PATENT SPECIFICATION**

(45) Date of publication and mention of the grant of the patent:
**12.02.2020 Bulletin 2020/07**

(21) Application number: **16857095.0**

(22) Date of filing: **17.10.2016**

(51) Int Cl.:
***C08L 11/00*** *(2006.01)* ***C08L 9/06*** *(2006.01)*
***C08J 9/00*** *(2006.01)* ***C08J 9/08*** *(2006.01)*
***C08L 9/00*** *(2006.01)* ***B60C 1/00*** *(2006.01)*

(86) International application number:
**PCT/JP2016/004606**

(87) International publication number:
**WO 2017/068772 (27.04.2017 Gazette 2017/17)**

(54) **RUBBER COMPOSITION AND TIRE**

KAUTSCHUKZUSAMMENSETZUNG UND REIFEN

COMPOSITION DE CAOUTCHOUC ET PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.10.2015 JP 2015205552**

(43) Date of publication of application:
**29.08.2018 Bulletin 2018/35**

(73) Proprietor: **Bridgestone Corporation**
**Tokyo 104-8340 (JP)**

(72) Inventor: **MIYOSHI, Masaki**
**Tokyo 104-8340 (JP)**

(74) Representative: **Oxley, Robin John George**
**Marks & Clerk LLP**
**15 Fetter Lane**
**London EC4A 1BW (GB)**

(56) References cited:
**WO-A1-2006/028505** **CN-B- 102 964 619**
**FR-A1- 2 998 508** **JP-A- S5 590 537**
**JP-A- H09 281 776** **US-A1- 2014 039 080**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 366 719 B1

## Description

TECHNICAL FIELD

The present disclosure relates to a rubber composition and a tire.

BACKGROUND

Conventionally, an organic foaming agent has been mainly used as a foaming agent included in a rubber composition. If, in addition to the organic foaming agent, an inorganic foaming agent (for example, see JP 2014-520174 A (PTL 1)) can be used as a foaming agent included in the rubber composition, even a compounding agent that decreases in performance improving effect when used in combination with the organic foaming agent may be able to be used in the rubber composition in combination with the inorganic foaming agent. This can expand the range of choices of combinations of foaming agents and compounding agents in the rubber composition.

FR 2 998 508 A1 discloses rubber compositions based on diene rubber, reinforcing filler (silica), water soluble micro particles (metallic salts), thermally meltable compounds which could be urea (fatty acid preferred) and a foaming agent preferably generating carbon dioxide.

CITATION LIST

Patent Literature

PTL 1: JP 2014-520174 A

SUMMARY

(Technical Problem)

However, in the case where an inorganic foaming agent such as baking soda is used as a foaming agent, it is difficult to ensure the balance between the vulcanization speed and the foaming speed.

It could therefore be helpful to provide a rubber composition and a tire that can ensure the balance between the vulcanization speed and the foaming speed.

(Solution to Problem)

A rubber composition according to the present disclosure comprises: a diene-based rubber component; a foaming agent generating carbon dioxide; a fatty acid metal salt; and urea, wherein the diene-based rubber component comprises at least one selected from natural rubber and butadiene rubber, a content of the foaming agent is 0.1 parts to 20 parts by mass with respect to 100 parts by mass the diene-based rubber component, a total content of the fatty acid metal salt and the urea is 0.1 parts to 20 parts by mass with respect to 100 parts by mass the diene-based rubber component, and a mass ratio of the fatty acid metal salt and the urea is 1:0.5 to 1:3.9.

(Advantageous Effect)

As a result of conducting intensive study, we discovered that, in the case of using a foaming agent that generates carbon dioxide, the balance between the vulcanization speed and the foaming speed can be ensured by containing a fatty acid metal salt and urea at a predetermined ratio.

According to the present disclosure, it is possible to provide a rubber composition and a tire that can ensure the balance between the vulcanization speed and the foaming speed.

DETAILED DESCRIPTION

A rubber composition and a tire according to one of the disclosed embodiments are described in detail below.

(Rubber composition)

A rubber composition according to one of the disclosed embodiments (hereafter also referred to as "exemplary rubber composition") includes at least a diene-based rubber component, a foaming agent, a fatty acid metal salt, and urea, and optionally includes other components.

In addition to the diene-based rubber component, the foaming agent, the fatty acid metal salt, and the urea, the exemplary rubber composition may further contain compounding agents typically used in the rubber industry, which may be selected as appropriate without affecting the object of the present disclosure. Commercially available products may be suitably used as these compounding agents. The rubber composition according to the embodiment can be produced by mixing a mixture of the diene-based rubber component, the foaming agent, the fatty acid metal salt, and the urea with compounding agents optionally selected as appropriate and subjecting the mixture to kneading, warming, extrusion, etc.

<Diene-based rubber component>

The diene-based rubber component comprises at least one selected from natural rubber (NR) and butadiene rubber (BR). "Diene-based rubber" mentioned here also includes appropriately modified products of these rubbers. These may be used singly or in combination of two or more.

Natural rubber (NR) and butadiene rubber (BR) are used in terms of ensuring the on-ice (low temperature) flexibility of the rubber composition or tire.

<Foaming agent>

The foaming agent is not limited as long as it generates carbon dioxide, and may be selected as appropriate depending on the purpose. Examples include inorganic foaming agents such as baking soda, sodium carbonate, calcium hydrogen carbonate, calcium carbonate, ammonium hydrogen carbonate, and ammonium carbonate. These may be used singly or in combination of two or more.

Of these, baking soda is preferable in terms of the balance between the vulcanization speed and the foaming speed.

The content of the foaming agent with respect to 100 parts by mass the diene-based rubber component is not limited as long as it is in a range of 0.1 parts to 20 parts by mass, and may be selected as appropriate depending on the purpose. The content is preferably 5 parts by mass or more, and more preferably 5 parts to 15 parts by mass.

If the content is less than 0.1 parts by mass, foaming does not occur. If the content is more than 20 parts by mass, there is a possibility of a decrease in wear resistance. If the content is in the preferable range or the more preferable range, the balance between the vulcanization speed and the foaming speed can be ensured more reliably.

<Fatty acid metal salt>

The fatty acid metal salt is not limited, and may be selected as appropriate depending on the purpose. For example, zinc stearate and magnesium stearate are preferable in terms of the balance between the vulcanization speed and the foaming speed. These may be used singly or in combination of two or more.

Of these, zinc stearate is particularly preferable.

<Urea>

The content of the urea with respect to 100 parts by mass the diene-based rubber component is not limited as long as the total content of the fatty acid metal salt and the urea is in a range of 0.1 parts to 20 parts by mass, and may be selected as appropriate depending on the purpose. The content is preferably 3 parts by mass or more.

If the content is in the preferable range or a more preferable range, the balance between the vulcanization speed and the foaming speed can be ensured more reliably.

In the case where the foaming agent is baking soda, the content of the urea is preferably 1/2 times or more the content of the baking soda. If the content of the urea is 1/2 times or more the content of the baking soda as the foaming agent, the balance between the vulcanization speed and the foaming speed can be ensured more reliably.

<Total content of fatty acid metal salt and urea>

The total content of the fatty acid metal salt and the urea with respect to 100 parts by mass the diene-based rubber component is not limited as long as it is in a range of 0.1 parts to 20 parts by mass, and may be selected as appropriate depending on the purpose. The total content is preferably 3 parts by mass or more, and more preferably 5 parts by mass or more.

If the total content is in the preferable range or the more preferable range, the balance between the vulcanization speed and the foaming speed can be ensured more reliably.

<Mass ratio of fatty acid metal salt and urea>

The mass ratio of the fatty acid metal salt and the urea is not limited as long as it is in a range of 1:0.5 to 1:3.9, and may be selected as appropriate depending on the purpose. The mass ratio is preferably 1:0.7 to 1:3.3, and more preferably 1:0.9 to 1:2.7.

If the mass ratio is less than 1:0.5, baking soda does not foam. If the mass ratio is more than 1:3.9, vulcanization is excessively fast, and foaming does not occur. If the mass ratio is in the preferable range or the more preferable range, the balance between the foaming speed and the vulcanization speed can be ensured.

<Other components>

The other components are not limited, and may be selected as appropriate depending on the purpose. Examples include a filler, an age resistor, a softener, stearic acid, zinc oxide, a vulcanization accelerator, a vulcanizing agent, oil, and sulfur.

In the rubber composition according to this embodiment, preferably, the fatty acid metal salt is at least one selected from the group consisting of zinc stearate and magnesium stearate. With this structure, the balance between the vulcanization speed and the foaming speed can be ensured reliably.

In the rubber composition according to this embodiment, further preferably, the foaming agent is baking soda. With this structure, the balance between the vulcanization speed and the foaming speed can be ensured more reliably.

In the rubber composition according to this embodiment, further preferably, the content of the urea is 3 parts by mass or more with respect to 100 parts by mass the diene-based rubber component. With this structure, the balance between the vulcanization speed and the foaming speed can be ensured more reliably.

In the rubber composition according to this embodiment, further preferably, the total content of the fatty acid metal salt and the urea is 5 parts by mass or more with respect to 100 parts by mass the diene-based rubber component. With this structure, the balance between the vulcanization speed and the foaming speed can be ensured more reliably.

In the rubber composition according to this embodiment, further preferably, the content of the foaming agent is 5 parts by mass or more with respect to 100 parts by mass the diene-based rubber component. With this structure, the balance between the vulcanization speed and the foaming speed can be ensured more reliably.

(Tire)

A tire according to one of the disclosed embodiments (hereafter also referred to as "exemplary tire") includes a tread in which the rubber composition according to this embodiment is used.

The method of producing the exemplary tire may be a conventional method. For example, members typically used for tire production, such as a carcass layer, a belt layer, and a tread layer containing unvulcanized rubber, are successively laminated on a drum for forming a tire. The drum is then removed to obtain a green tire. The green tire is then heated and vulcanized according to an ordinary method, to obtain a desired tire (e.g. pneumatic tire). Thus, the method of producing the exemplary tire includes, for example, (i) a lamination step and (ii) a heating and vulcanization step.

The tire according to this embodiment includes the tread in which the rubber composition according to this embodiment is used.

The tire according to this embodiment can ensure the balance between the vulcanization speed and the foaming speed. Hence, for example, a water drainage effect can be produced to thus improve on-ice performance, i.e. performance on ice (around 0 °C) which is most slippery.

EXAMPLES

The disclosed techniques are described in more detail below using examples, although the present disclosure is not limited to these examples.

(Examples 1 to 13 and Comparative Examples 1 to 10)

Rubber compositions of Examples 1 to 13 and Comparative Examples 1 to 10 were produced according to an ordinary method, based on the respective compounding recipes listed in Tables 1 and 2. In Tables 1 and 2, the unit is "parts by mass" unless otherwise indicated.

Each obtained rubber composition was vulcanized as a tread (foamed rubber layer), and a test passenger vehicle radial tire with tire size 185/70R15 was produced according to an ordinary method.

<Measurement of foaming ratio>

The foaming ratio Vs denotes the total foaming ratio in the tread, and was calculated according to the following formula using samples (n = 10) collected from each tread:

$$Vs = ((\rho_0/\rho_1) - 1) \times 100\ (\%)$$

where $\rho_1$ is the density (g/cm$^3$) of the rubber (foamed rubber) after the vulcanization, and $\rho_0$ is the density (g/cm$^3$) of a solid phase portion in the rubber (foamed rubber) after the vulcanization. For example, the density of the rubber (foamed rubber) after the vulcanization and the density of the solid phase portion in the rubber (foamed rubber) after the vulcanization were calculated by measuring the mass in ethanol and the mass in air. The measurement results and the evaluation results are listed in Tables 1 and 2. The evaluation criteria of the foaming ratio are as follows.

<Evaluation criteria of foaming ratio>

Excellent: 95 % or more and less than 105 % in comparison with current foaming agent
Good: 50 % or more and less than 95 % in comparison with current foaming agent, 105 % or more in comparison with current foaming agent
Poor: less than 50 % in comparison with current foaming agent

<Measurement of vulcanization speed>

Measurement was taken using a typical rheometer, and quantified in vulcanization speed T0.9. The measurement results and the evaluation results are listed in Tables 1 and 2. The evaluation criteria of the vulcanization speed are as follows.

<Evaluation criteria of vulcanization speed>

Excellent: 90 % or more in comparison with current
Good: 50 % or more and less than 90 % in comparison with current
Poor: less than 50 % in comparison with current

<Evaluation of on-ice performance>

Four tires corresponding to each of the above-mentioned test tires (tire size 185/70R15) were attached to a domestic 1600CC class passenger vehicle, and on-ice braking performance at freezing temperature - 1 °C was examined. The result was expressed by an index according to the following formula, using the tire of Comparative Example 1 as a control. A higher value indicates better on-ice performance. The evaluation results are listed in Tables 1 and 2.

$$\text{On-ice performance} = ((\text{braking distance of tire of Comparative Example 1})/(\text{braking distance of sample tire})) \times 100$$

[Table 1]

| | | Example 1 | Comparative Example 1 | Example 2 | Comparative Example 2 | Example 3 | Example 4 | Comparative Example 3 | Comparative Example 4 | Comparative Example 5 | Comparative Example 6 |
|---|---|---|---|---|---|---|---|---|---|---|---|
| Diene-based rubber component | Natural rubber (NR)*1 | 45 | 45 | 45 | 45 | 45 | 45 | 45 | 45 | 45 | 45 |
| | Butadiene rubber (BR)*2 | 55 | 55 | 55 | 55 | 55 | 55 | 55 | 55 | 55 | 55 |
| Carbon black (CB)*3 | | 35 | 35 | 35 | 35 | 35 | 35 | 35 | 35 | 35 | 35 |
| Silica*4 | | 41.86 | 41.86 | 41.86 | 41.86 | 41.86 | 41.86 | 41.86 | 41.86 | 41.86 | 41.86 |
| Silane coupling agent*5 | | 3.36 | 3.36 | 3.36 | 3.36 | 3.36 | 3.36 | 3.36 | 3.36 | 3.36 | 3.36 |
| Oil*6 | | 20 | 20 | 20 | 20 | 20 | 20 | 20 | 20 | 20 | 20 |
| Wax*7 | | 1.5 | 1.5 | 1.5 | 1.5 | 1.5 | 1.5 | 1.5 | 1.5 | 1.5 | 1.5 |
| Age resistor | 6C*8 | 1.5 | 1.5 | 1.5 | 1.5 | 1.5 | 1.5 | 1.5 | 1.5 | 1.5 | 1.5 |
| Antioxidant | RD*9 | 0.3 | 0.3 | 0.3 | 0.3 | 0.3 | 0.3 | 0.3 | 0.3 | 0.3 | 0.3 |
| Vulcanization accelerator | CZ*10 | 0.5 | 0.5 | 0.5 | 0.5 | 0.5 | 0.5 | 0.5 | 0.5 | 0.5 | 0.5 |
| Sulfur | | 2 | 2 | 2 | 2 | 2 | 2 | 2 | 2 | 2 | 2 |
| Stearic acid | | 0.75 | 2.75 | 2.75 | 3.25 | 0.75 | 0.75 | 0.75 | 2.75 | 0.75 | 2.75 |
| Zinc oxide | | 1.5 | 2 | 2 | 2 | 1.5 | 1.5 | 1.5 | 2 | 1.5 | 2 |
| Fatty acid metal salt | Zinc stearate | 2.2 | 0 | 0.5 | 0 | 3.3 | 1.1 | 2.2 | 0 | 2.2 | 0 |
| | Magnesium stearate | 1 | 1 | 1 | 1 | 1 | 1 | 0 | 0 | 0 | 0 |
| | Fatty acid metal salt*11 | 0 | 0 | 0 | 0 | 0 | 0 | 0 | 0 | 0 | 0 |
| Urea | | 4 | 4 | 4 | 4 | 4 | 4 | 4 | 4 | 4 | 4 |
| Total of fatty acid metal salt and urea | | 7.2 | 5 | 5.5 | 5 | 8.3 | 6.1 | 6.2 | 4 | 6.2 | 4 |
| Urea/fatty acid metal salt (mass ratio) | | 1.3 | 4.0 | 2.7 | 4.0 | 0.9 | 1.9 | 1.8 | - | 1.8 | - |

(continued)

| | | Example 1 | Comparative Example 1 | Example 2 | Comparative Example 2 | Example 3 | Example 4 | Comparative Example 3 | Comparative Example 4 | Comparative Example 5 | Comparative Example 6 |
|---|---|---|---|---|---|---|---|---|---|---|---|
| Foaming agent | Baking soda*12 | 9 | 9 | 9 | 9 | 9 | 9 | 0 | 0 | 0 | 0 |
| | Organic foaming agent (DPT)*13 | 0 | 0 | 0 | 0 | 0 | 0 | 5 | 5 | 0 | 0 |
| | Organic foaming agent (ADCA)*14 | 0 | 0 | 0 | 0 | 0 | 0 | 0 | 0 | 5 | 5 |
| Rubber composition evaluation result | Foaming ratio evaluation | Excellent | Poor | Good | Poor | Excellent | Good | Excellent | Good | Excellent | Good |
| | Vulcanization speed evaluation | Excellent | Excellent | Excellent | Excellent | Excellent | Excellent | Excellent | Excellent | Excellent | Excellent |
| | Balance between vulcanization and foaming | No problem | No foaming | Low foaming ratio | No foaming | No problem | Low foaming ratio | No problem | Low foaming ratio | No problem | Low foaming ratio |
| Tire evaluation result | On-ice performance | 100 | 70 | 90 | 70 | 100 | 90 | 100 | 90 | 100 | 90 |

[Table 2]

| | | Comparative Example 7 | Example 5 | Example 6 | Comparative Example 8 | Comparative Example 9 | Example 7 | Example 8 | Example 9 | Example 10 | Example 11 | Example 12 | Comparative Example 10 | Example 13 |
|---|---|---|---|---|---|---|---|---|---|---|---|---|---|---|
| Diene-based rubber component | Natural rubber (NR)*1 | 45 | 45 | 45 | 45 | 45 | 45 | 45 | 45 | 45 | 45 | 45 | 45 | 45 |
| | Butadiene rubber (BR) *2 | 55 | 55 | 55 | 55 | 55 | 55 | 55 | 55 | 55 | 55 | 55 | 55 | 55 |
| Carbon black (CB)*3 | | 35 | 35 | 35 | 35 | 35 | 35 | 35 | 35 | 35 | 35 | 35 | 35 | 35 |
| Silica*4 | | 41.86 | 41.86 | 41.86 | 41.86 | 41.86 | 41.86 | 41.86 | 41.86 | 41.86 | 41.86 | 41.86 | 41.86 | 41.86 |
| Silane coupling agent*5 | | 3.36 | 3.36 | 3.36 | 3.36 | 3.36 | 3.36 | 3.36 | 3.36 | 3.36 | 3.36 | 3.36 | 3.36 | 3.36 |
| Oil*6 | | 20 | 20 | 20 | 20 | 20 | 20 | 20 | 20 | 20 | 20 | 20 | 20 | 20 |
| Wax*7 | | 1.5 | 1.5 | 1.5 | 1.5 | 1.5 | 1.5 | 1.5 | 1.5 | 1.5 | 1.5 | 1.5 | 1.5 | 1.5 |
| Age resistor | 6C*8 | 1.5 | 1.5 | 1.5 | 1.5 | 1.5 | 1.5 | 1.5 | 1.5 | 1.5 | 1.5 | 1.5 | 1.5 | 1.5 |
| Antioxidant | RD*9 | 0.3 | 0.3 | 0.3 | 0.3 | 0.3 | 0.3 | 0.3 | 0.3 | 0.3 | 0.3 | 0.3 | 0.3 | 0.3 |
| Vulcanization accelerator | CZ*10 | 0.5 | 0.5 | 0.5 | 0.5 | 0.5 | 0.5 | 0.5 | 0.5 | 0.5 | 0.5 | 0.5 | 0.5 | 0.5 |
| Sulfur | | 2 | 2 | 2 | 2 | 2 | 2 | 2 | 2 | 2 | 2 | 2 | 2 | 2 |
| Stearic acid | | 0.75 | 0.75 | 0.75 | 0.75 | 0.75 | 0.75 | 0.75 | 0.75 | 0.75 | 0.75 | 0.75 | 0.75 | 0.75 |
| Zinc oxide | | 1.5 | 1.5 | 1.5 | 1.5 | 1.5 | 1.5 | 1.5 | 1.5 | 1.5 | 1.5 | 1.5 | 1.5 | 1.5 |
| Fatty acid metal salt | Zinc stearate | 0.03 | 1.7 | 6 | 7 | 2.2 | 2.2 | 2.2 | 2.2 | 2.2 | 2.2 | 2.2 | 2.2 | 0 |
| | Magnesium stearate | 0 | 0 | 0 | 0 | 1 | 1 | 1 | 1 | 1 | 1 | 1 | 1 | 0 |
| | Fatty acid metal salt*11 | 0 | 0 | 0 | 0 | 0 | 0 | 0 | 0 | 0 | 0 | 0 | 0 | 3.2 |
| Urea | | 0.06 | 3.4 | 12 | 14 | 1.3 | 1.6 | 12.4 | 3 | 4 | 4 | 4 | 4 | 4 |
| Total of fatty acid metal salt and urea | | 0.09 | 5.1 | 18 | 21 | 4.5 | 4.8 | 15.6 | 6.2 | 7.2 | 7.2 | 7.2 | 7.2 | 7.2 |

(continued)

| | | Comparative Example 7 | Example 5 | Example 6 | Comparative Example 8 | Comparative Example 9 | Example 7 | Example 8 | Example 9 | Example 10 | Example 11 | Example 12 | Comparative Example 10 | Example 13 |
|---|---|---|---|---|---|---|---|---|---|---|---|---|---|---|
| Urea/fatty acid metal salt (mass ratio) | | 2.0 | 2.0 | 2.0 | 2.0 | 0.4 | 0.5 | 3.9 | 0.9 | 1.3 | 1.3 | 1.3 | 1.3 | 1.3 |
| Foaming agent | Baking soda*12 | 9 | 9 | 9 | 9 | 9 | 9 | 9 | 9 | 0.1 | 5 | 20 | 21 | 9 |
| | Organic foaming agent (DPT) *13 | 0 | 0 | 0 | 0 | 0 | 0 | 0 | 0 | 0 | 0 | 0 | 0 | 0 |
| | Organic foaming agent (ADCA)*14 | 0 | 0 | 0 | 0 | 0 | 0 | 0 | 0 | 0 | 0 | 0 | 0 | 0 |
| Rubber composition evaluation result | Foaming ratio evaluation | Poor | Excellent | Excellent | Excellent | Good | Excellent | Excellent | Excellent | Excellent | Excellent | Excellent | Good | Excellent |
| | Vulcanization speed evaluation | Excellent | Excellent | Good | Poor | Excellent | Excellent | Good | Excellent | Excellent | Excellent | Excellent | Excellent | Excellent |
| | Balance between vulcanization and foaming | Lowfoaming ratio | No problem | No problem | No foaming | Lowfoaming ratio | No problem | No problem | No problem | No problem | No problem | No problem | High foaming ratio | No problem |

(continued)

| | | Comparative Example 7 | Example 5 | Example 6 | Comparative Example 8 | Comparative Example 9 | Example 7 | Example 8 | Example 9 | Example 10 | Example 11 | Example 12 | Comparative Example 10 | Example 13 |
|---|---|---|---|---|---|---|---|---|---|---|---|---|---|---|
| Tire evaluation result | On-ice performance | 90 | 100 | 95 | 70 | 90 | 100 | 95 | 100 | 100 | 100 | 100 | 105 | 100 |

*1. Natural rubber (NR)
*2. Butadiene rubber (BR): (manufacturer name: JSR Corporation, trade name: Polybutadiene Rubber BR01)
*3. Carbon black (CB): (made by Asahi Carbon Co., Ltd., [N134 ($N_2SA$: 146 $m^2/g$)])
*4. Silica: (made by Tosoh Silica Corporation, trade name "Nipsil AQ")
*5. Silane coupling agent: (made by Evonik Degussa Japan Co., Ltd., trade name "Si69")
*6. Oil: naphthenic process oil: (made by Idemitsu Kosan Co., Ltd., trade name "Diana Process Oil NS-24", pour point: -30 °C)
*7. Wax
*8. Age resistor 6C: (N-phenyl-N'-(1,3-dimethylbutyl)-p-phenylenediamine, made by Ouchi Shinko Chemical Industrial Co., Ltd., "NOCRAC NS-6")
*9. Antioxidant RD: (made by Seiko Chemical Co., Ltd., "NONFLEX RD")
*10. Vulcanization accelerator CZ: (made by Sanshin Chemical Industry Co., Ltd., "Sanceler CZ")
*11. Fatty acid metal salt: zinc stearate: (made by NOF Corporation, "Zinc Stearate G")
*12. Inorganic foaming agent: baking soda: (made by Otsuka Chemical Co., Ltd., "P-5"): foaming agent generating carbon dioxide
*13. Organic foaming agent: dinitrosopentamethylenetetramine (DPT): foaming agent not generating carbon dioxide
*14. Organic foaming agent: azodicarbonamide (ADCA): foaming agent not generating carbon dioxide

As shown in Tables 1 and 2, the rubber compositions of Examples 1 to 13 in which (i) the content of the foaming agent is 0.1 parts to 20 parts by mass with respect to 100 parts by mass the diene-based rubber component, (ii) the total content of the fatty acid metal salt and the urea is 0.1 parts to 20 parts by mass with respect to 100 parts by mass the diene-based rubber component, and (iii) the mass ratio of the fatty acid metal salt and the urea is 1:0.5 to 1:3.9 can ensure the balance between the vulcanization speed and the foaming speed, as compared with the rubber compositions of Comparative Examples 1 to 10 not satisfying at least one of (i) to (iii).

Moreover, as shown in Tables 1 and 2, the tires produced from the rubber compositions of Examples 1 to 13 satisfying all of (i) to (iii) have improved on-ice performance and can be produced in a predetermined range of vulcanization time, as compared with the tires produced from the rubber compositions of Comparative Examples 1 to 10 not satisfying at least one of (i) to (iii).

## Claims

**1.** A rubber composition for a tire comprising:

a diene-based rubber component;
a foaming agent generating carbon dioxide;
a fatty acid metal salt; and
urea,
wherein the diene-based rubber component comprises at least one selected from natural rubber and butadiene rubber,
a content of the foaming agent is 0.1 parts to 20 parts by mass with respect to 100 parts by mass the diene-based rubber component,
a total content of the fatty acid metal salt and the urea is 0.1 parts to 20 parts by mass with respect to 100 parts by mass the diene-based rubber component, and
a mass ratio of the fatty acid metal salt and the urea is 1:0.5 to 1:3.9.

**2.** The rubber composition for a tire according to claim 1,
wherein the fatty acid metal salt is at least one selected from the group consisting of zinc stearate and magnesium stearate.

**3.** The rubber composition for a tire according to claim 1 or 2,
wherein the foaming agent is baking soda.

**4.** The rubber composition for a tire according to any of claims 1 to 3,
wherein a content of the urea is 3 parts by mass or more with respect to 100 parts by mass the diene-based rubber component.

**5.** The rubber composition for a tire according to any of claims 1 to 4,
wherein the total content of the fatty acid metal salt and the urea is 5 parts by mass or more with respect to 100 parts by mass the diene-based rubber component.

**6.** The rubber composition for a tire according to any of claims 1 to 5,
wherein the content of the foaming agent is 5 parts by mass or more with respect to 100 parts by mass the diene-based rubber component.

**7.** A tire comprising
a tread in which the rubber composition for a tire according to any of claims 1 to 6 is used.

## Patentansprüche

**1.** Kautschukzusammensetzung für einen Reifen, umfassend:

eine Kautschukkomponente auf Dienbasis;
ein Kohlendioxid erzeugendes Schäumungsmittel;
ein Fettsäuremetallsalz; und

Harnstoff,
wobei die Kautschukkomponente auf Dienbasis mindestens eines umfasst ausgewählt von Naturkautschuk und Butadienkautschuk,
ein Gehalt des Schäumungsmittels 0,1 bis 20 Masseteile mit Bezug auf 100 Masseteile der Kautschukkomponente auf Dienbasis beträgt,
ein Gesamtgehalt des Fettsäuremetallsalzes und des Harnstoffs 0,1 bis 20 Masseteile mit Bezug auf 100 Masseteile der Kautschukkomponente auf Dienbasis beträgt, und
ein Masseverhältnis des Fettsäuremetallsalzes und des Harnstoff 1:0,5 bis 1:3,9 beträgt.

2. Kautschukzusammensetzung für einen Reifen nach Anspruch 1,
wobei das Fettsäuremetallsalz mindestens eines ist ausgewählt aus der Gruppe bestehend aus Zinkstearat und Magnesiumstearat.

3. Kautschukzusammensetzung für einen Reifen nach Anspruch 1 oder 2,
wobei das Schäumungsmittel ein Backnatron ist.

4. Kautschukzusammensetzung für einen Reifen nach einem der Ansprüche 1 bis 3,
wobei ein Gehalt des Harnstoffs 3 Masseteile oder mehr mit Bezug auf 100 Masseteile der Kautschukkomponente auf Dienbasis beträgt.

5. Kautschukzusammensetzung für einen Reifen nach einem der Ansprüche 1 bis 4,
wobei der Gesamtgehalt des Fettsäuremetallsalzes und des Harnstoff 5 Masseteile oder mehr mit Bezug auf 100 Masseteile der Kautschukkomponente auf Dienbasis beträgt.

6. Kautschukzusammensetzung für einen Reifen nach einem der Ansprüche 1 bis 5,
wobei der Gehalt des Schäumungsmittels 5 Masseteile oder mehr mit Bezug auf 100 Masseteile der Kautschukkomponente auf Dienbasis beträgt.

7. Reifen umfassend
ein Reifenprofil, wobei die Kautschukzusammensetzung für einen Reifen nach einem der Ansprüche 1 bis 6 verwendet wird.

**Revendications**

1. Composition de caoutchouc pour un pneumatique comprenant:

un composant de caoutchouc à base de diène;
un agent d'expansion générant du dioxyde de carbone;
un sel métallique d'acide gras; et
de l'urée,
dans laquelle le composant de caoutchouc à base de diène comprend au moins l'un sélectionné parmi le caoutchouc d'origine naturelle et le caoutchouc de butadiène,
une teneur de l'agent d'expansion étant de 0,1 partie à 20 parties en masse par rapport à 100 parties en masse du composant de caoutchouc à base de diène,
une teneur totale du sel métallique d'acide gras et de l'urée étant de 0,1 partie à 20 parties en masse par rapport à 100 parties en masse du composant de caoutchouc à base de diène, et
un rapport en masse du sel métallique d'acide gras et de l'urée étant de 1:0,5 à 1:3,9.

2. Composition de caoutchouc pour un pneumatique selon la revendication 1,
le sel métallique d'acide gras étant au moins l'un sélectionné dans le groupe constitué du stéarate de zinc et du stéarate de magnésium.

3. Composition de caoutchouc pour un pneumatique selon la revendication 1 ou 2,
l'agent d'expansion étant le bicarbonate de soude.

4. Composition de caoutchouc pour un pneumatique selon l'une quelconque des revendications 1 à 3,
dans lequel une teneur de l'urée est de 3 parties en masse ou plus par rapport à 100 parties en masse du composant de caoutchouc à base de diène.

5. Composition de caoutchouc pour un pneumatique selon l'une quelconque des revendications 1 à 4, la teneur totale du sel métallique d'acide gras et de l'urée étant de 5 parties en masse ou plus par rapport à 100 parties en masse du composant de caoutchouc à base de diène.

6. Composition de caoutchouc pour un pneumatique selon l'une quelconque des revendications 1 à 5, la teneur de l'agent d'expansion étant de 5 parties en masse ou plus par rapport à 100 parties en masse du composant de caoutchouc à base de diène.

7. Pneumatique comprenant une bande de roulement dans laquelle la composition de caoutchouc pour un pneumatique selon l'une quelconque des revendications 1 à 6 est utilisée.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014520174 A
- FR 2998508 A1